# EUROPEAN PATENT APPLICATION

(11) **EP 3 260 951 A1**
(43) Date of publication of application: **27.12.2017**
(21) Application number: 16752271.3
(22) Date of filing: 02.02.2016
(51) Int. Cl.: G06F 3/01, G06F 3/0346, G06F 3/038, G06F 3/0484

(54) **INFORMATION PROCESSING DEVICE, METHOD, AND PROGRAM**

(30) Priority: 16.02.2015 JP 2015027460
(71) Applicant: Sony Corporation, Tokyo 108-0075 (JP)
(72) Inventor: YASUDA, Ryouhei, Tokyo 108-0075 (JP); NODA, Takuro, Tokyo 108-0075 (JP)
(74) Representative: MFG Patentanwälte Meyer-Wildhagen Meggle-Freund Gerhard PartG mbB
(86) International application number: PCT/JP2016/053010
(87) International publication number: WO 2016/132884

(57) **Abstract**

The present technology relates an information processing apparatus and method, and a program having improved usability.

The information processing system detects a gaze direction of a user, on the basis of images captured by a plurality of cameras, and performs processing according to a gaze position of the user determined on the basis of the gaze direction. Furthermore, the information processing system calculates accuracy in detection of the gaze direction of the user, and switches a display mode of an operation screen to be displayed, according to the accuracy in detection of the gaze direction. The present technology can be applied to an information processing system.

## Description

### TECHNICAL FIELD

The present technology relates to an information processing apparatus and method, and a program, and in particular relates to an information processing apparatus and method, and a program having improved usability.

### BACKGROUND ART

Cameras have been proposed to detect a gaze direction of a user for evaluation or feedback for safety drive, or for selection of an icon on a user interface (UI) or movement of a cursor, using a result of the detection.

As described above, in a case where a result of detection of a gaze direction of a user is used to perform some processing, the gaze direction of the user is required to be detected highly accurately. Then, a technology has been proposed which uses a plurality of cameras to improve accuracy in detection of a gaze direction (e.g., see Patent Document 1).

In this technology, one or two cameras are selected from a plurality of cameras to be used for detecting the gaze direction. Then, in a case where one camera is selected, the direction of the camera is defined as the gaze direction, and in a case where two cameras are selected, the gaze direction is detected on the basis of images acquired from the two cameras.

Furthermore, for example, for detection of a gaze direction of a user using a plurality of cameras, the following technologies have been also proposed, a technology for detecting an opening or closing state of eyes of the user to avoid an error in detecting a gaze direction (e.g., see Patent Document 2), and a technology for detecting a direction of a face of the user and features by template matching, and detecting a gaze direction on the basis of a result of the detection (e.g., see Patent Document 3).

### CITATION LIST

### PATENT DOCUMENT

Patent Document 1: Japanese Patent Application Laid-Open No. 2012-22646
Patent Document 2: Japanese Patent Application Laid-Open No. 2003-15816
Patent Document 3: Japanese Patent Application Laid-Open No. 2002-288670

### SUMMARY OF THE INVENTION

### PROBLEMS TO BE SOLVED BY THE INVENTION

However, for detection of a gaze direction of a user, it is sometimes difficult to highly accurately detect a gaze direction of a user depending on a positional relationship between a user and a camera, such as a position or direction of the face of the user.

As described above, in a condition having a reduced accuracy in detection of a gaze direction, processing not expected by the user, a system administrator, or the like may be performed according to a result of detection of the gaze direction. Therefore, it has been desired to improve the usability of a system performing processing using a result of detection of a gaze direction to perform processing desired by the user, the system administrator, or the like as much as possible in any condition.

The present technology has been made in view of such circumstances, and the present technology provides improved usability.

### SOLUTIONS TO PROBLEMS

An information processing apparatus according to a first aspect of the present technology includes a gaze direction detection unit that detects a gaze direction of a user, on the basis of captured images obtained by capturing images of the user as an object by a plurality of image capturing units, and a detection accuracy calculation unit that calculates accuracy in detection of the gaze direction of the user.

The detection accuracy calculation unit can calculate the accuracy in detection, on the basis of at least any of information about a positional relationship between the image capturing unit and the user, information about the image capturing unit, information about the captured images, and a duration of gazing by the user.

An information processing apparatus can be further provided with a first processing unit that performs processing according to the accuracy in detection.

The first processing unit is configured to display an operation screen operated by the gaze of the user, in a display mode according to the accuracy in detection.

The first processing unit is configured to display objects to be operated having different sizes on the operation screen, according to the accuracy in detection.

The first processing unit is configured to display different numbers of objects to be operated on the operation screen, according to the accuracy in detection.

An information processing apparatus is further provided with a second processing unit that performs processing according to a gaze position of the user on the operation screen, obtained from the gaze direction.

The first processing unit is configured to display the operation screen on which several objects to be operated positioned in the vicinity of the gaze position are displayed as candidates for an object to be operated corresponding to the gaze position, in a case where the accuracy in detection is less than a threshold.

The first processing unit is configured to compare the accuracy in detection of the gaze direction calculated for each of a plurality of the users with a predetermined threshold to perform processing according to a result of the comparison.

An information processing method or a program according to the first aspect of the present technology includes the steps of detecting a gaze direction of a user, on the basis of captured images obtained by capturing images of the user as an object by a plurality of image capturing units, and calculating an accuracy in detection of the gaze direction of the user.

According to the first aspect of the present technology, on the basis of captured images obtained by capturing images of a user as an object by a plurality of image capturing units, a gaze direction of the user is detected, and an accuracy in detection of the gaze direction of the user is calculated.

An information processing apparatus according to the second aspect of the present technology includes a gaze direction detection unit that detects a gaze direction of a user, on the basis of at least one of captured images obtained by capturing images of the user as an object by a plurality of image capturing units, a head detection unit that detects a head of the user from the captured images, for at least two of the captured images obtained by the plurality of the image capturing units, to determine a position of the head of the user, and determining the position of the head from part of the user detected from the captured images by estimation, in a case where a head of the user is not detected from the captured images, and a gaze position calculation unit that calculates a gaze position of the user on the basis of the gaze direction of the user and the position of the head of the user obtained for the at least two captured images.

According to the second aspect of the present technology, a gaze direction of a user is detected, on the basis of at least one of captured images obtained by capturing images of the user as an object by a plurality of image capturing units, a head of the user is detected from the captured images, for at least two of the captured images obtained by the plurality of the image capturing units, to determine a position of the head of the user, and the position of the head is determined from part of the user detected from the captured images by estimation, in a case where a head of the user is not detected from the captured images, and a gaze position of the user is calculated, on the basis of the gaze direction of the user and the position of the head of the user obtained for the at least two captured images.

### EFFECTS OF THE INVENTION

According to the first aspect of the present technology, usability can be improved. Furthermore, according to the second aspect of the present technology, a gaze position of the user can be detected more robustly.

### BRIEF DESCRIPTION OF DRAWINGS

Fig. 1 is a diagram illustrating detection of a gaze direction.
Fig. 2 is a diagram illustrating UI display according to an accuracy in detection of a gaze direction.
Fig. 3 is a diagram illustrating an exemplary configuration of an information processing system.
Fig. 4 is a diagram illustrating directions of a face and eyes of a user.
Fig. 5 is a diagram illustrating an exemplary detailed configuration of the information processing system.
Fig. 6 is a flowchart illustrating a UI display process.
Fig. 7 is a diagram illustrating UI display according to an accuracy in detection of a gaze direction.
Fig. 8 is a flowchart illustrating an UI display process.
Fig. 9 is a diagram illustrating an exemplary configuration of an information processing system.
Fig. 10 is a diagram illustrating an exemplary configuration of an information processing system.
Fig. 11 is a diagram illustrating an exemplary configuration of a computer.

### MODE FOR CARRYING OUT THE INVENTION

Embodiments to which the present technology is applied will be described below with reference to the drawings.

### <First embodiment>

### <Outline of the present technology>

First, a description will be given of an outline of the present technology. The present technology relates to an information processing system detecting a gaze direction of at least one user, and performing processing according to a result of the detection.

An information processing system to which the present technology is applied mainly includes using a plurality of cameras to robustly detect a gaze direction, and calculating accuracy in detection of the gaze direction to perform processing according to the accuracy in detection of the gaze direction.

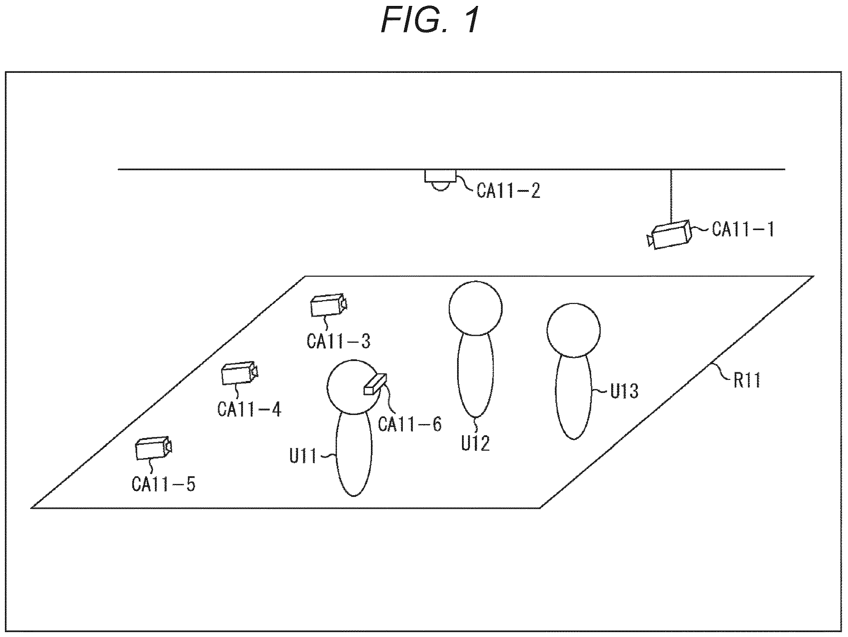

For example, as illustrated in Fig. 1, an information processing system to which the present technology is applied detects a gaze direction of at least one user, as an object person from which a gaze direction is detected, in a predetermined area R11, and performs processing according to a result of the detection.

That is, the information processing system includes cameras CA11-1 to CA11-6, and the information processing system uses the cameras CA11-1 to CA11-6 to detect gaze directions of users U11 to U13 in the area R11.

For example, the camera CA11-1 is provided on a ceiling in a space in the area R11, and is used as a camera capturing an image of a specific area in the area R11, and the camera CA11-2 is provided on a ceiling in a space in the area R11, and is used as a wide angle camera capturing an image of the whole of the area R11.

Furthermore, the cameras CA11-3 to CA11-5 are used as cameras each fixed to any position in the area R11, and the camera CA11-6 is used as a wearable camera mounted to a head of the user U11.

Note that, in a case where there is no need to particularly distinguish between the cameras CA11-1 to CA11-6, each of the cameras is hereinafter also simply referred to as camera CA11.

As described above, the information processing system uses a camera CA11 worn by a user, in addition to cameras CA11 fixed on a ceiling or the like in a space, and the plurality of cameras CA11 captures images of the users U11 to U13 as objects. Then, the information processing system detects the gaze directions of the users U11 to U13 on the basis of captured images obtained as a result of the capturing images.

As described above, use of captured images obtained by the plurality of cameras CA11 allows robust detection of the gaze direction of each user.

Note that in a case where a user wears a head mounted device having a gaze direction detection function, a result of detection of a gaze direction, obtained by the head mounted device, may be used.

Here, the head mounted device having a gaze direction detection function may be a device only having a gaze direction detection function, a display device having a gaze direction detection function, or a wearable camera such as the camera CA11-6.

For example, in a case where the camera CA11-6 has a gaze direction detection function, the information processing system directly uses a gaze direction of a user U11 detected by the camera CA11-6. as a result of detection of the gaze direction of the user U11.

Furthermore, in the information processing system, when a gaze direction of a user is detected, accuracy in detection of the gaze direction is also calculated, and processing according to the obtained accuracy in detection of the gaze direction is performed, and thus, usability of the information processing system is improved.

For example, in a case where a gaze direction of a user is detected, the accuracy in detection of the gaze direction of the user is changed depending on a combination of cameras used for the detection of the gaze direction, a positional relationship between the cameras and the user, performance of the cameras, such as resolution, an image capturing condition such as brightness, a condition of a captured image of an object, such as blurriness, or the like.

Therefore, the information processing system calculates the accuracy in detection of the gaze direction, on the basis of the performance of the cameras, the combination of cameras, the image capturing condition, the condition of a captured image, or the like. Then, the information processing system performs processing according to the obtained accuracy in detection of the gaze direction.

For example, the information processing system causes a predetermined display unit to display, as a UI, an operation screen operated by the gaze of the user. More specifically, for example, the operation screen as the UI is displayed on the display unit, and the user designates an icon on the operation screen by the gaze of him/her-self to perform a process assigned to the icon.

Furthermore, in this configuration, accuracy in detection of a gaze direction is determined only by a distance between a user and a camera performing detection of the gaze direction, and the accuracy in detection of the gaze direction is increased with reduced distance between a camera and a user.

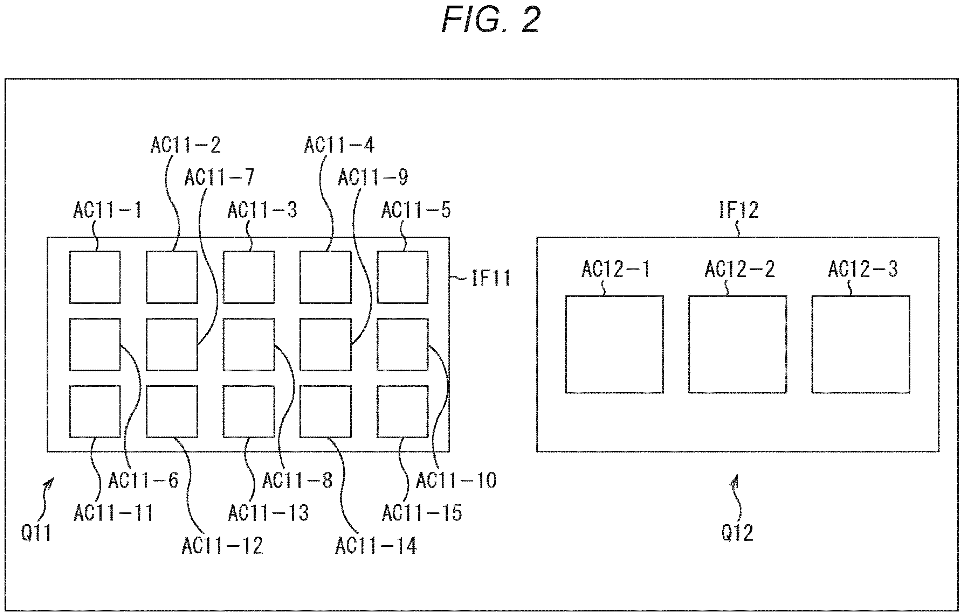

In such a case, for example, the information processing system switches display of the operation screen, as illustrated in Fig. 2, according to the accuracy in detection of the gaze direction.

That is, in a case where a distance between a camera and a user is small, and the accuracy in detection of the gaze direction is high, the information processing system displays an operation screen IF11 indicated by an arrow Q11. On the other hand, in a case where a distance between a camera and a user is large, and the accuracy in detection of the gaze direction is low, the information processing system displays an operation screen IF12 indicated by an arrow Q12.

A total of 15 icons AC11-1 to AC11-15 as objects to be operated are aligned on the operation screen IF11 indicated by the arrow Q11. Note that, in a case where there is no need to particularly distinguish between the icons AC11-1 to AC11-15, each of the icons is hereinafter also simply referred to as icon AC11.

In this case, the accuracy in detection of the gaze direction is fully high, and thus the gaze position (gaze point) of the user on the operation screen IF11 which is determined on the basis of the gaze direction of the user can be also highly accurately determined. Therefore, even when a certain large number of icons AC11 are displayed on the operation screen IF11, it can be accurately identified whether the user gazes at which of the icons AC11, that is, the user selects which icon AC11, on the basis of a result of detection of the gaze direction of the user.

On the other hand, in a case where the accuracy in detection of the gaze direction is low, accuracy in detection of the gaze position of the user is also reduced, and the information processing system displays the operation screen IF12 having a reduced number of icons thereon, as indicated by the arrow Q12.

In this example, on the operation screen IF12, only three icons AC12-1 to AC12-3 are displayed as the objects to be operated. Note that, in a case where there is no need to particularly distinguish between the icons AC12-1 to AC12-3, each of the icons is hereinafter also simply referred to as icon AC12.

When the operation screen IF12 indicated by the arrow Q12 and the operation screen IF11 indicated by the arrow Q11 are compared with each other, the operation screen IF12 displays a smaller number of icons AC12 than the number of icons AC12 on the operation screen IF11, in a larger size. Accordingly, even when the accuracy in detection of the gaze direction is reduced to some degree, an icon AC12 designated (selected) by the user can be correctly detected.

As described above, the number or size of icons displayed on the operation screen is changed according to accuracy in detection of a gaze direction, and thus, an UI can be provided to prevent false detection of an icon selected by the user without causing a user to feel stress arising from false detection or the like. In other words, operability for selecting an icon on the operation screen, that is, usability can be improved.

Note that an example of displaying any of two display patterns, that is, the operation screen IF11 and the operation screen IF12 according to the accuracy in detection of the gaze direction has been described here, but any of three or more of display patterns may be selected according to the accuracy in detection of the gaze direction. That is, the operation screens may be changed stepwise in display mode according to the accuracy in detection of the gaze direction.

Furthermore, an example of changing the number and size of icons according to the accuracy in detection of the gaze direction has been described here, but an operation screen may be employed which is partially magnified and displayed according to the accuracy in detection of the gaze direction. Specifically, for example, when the accuracy in detection of the gaze direction is fully high, the whole of the operation screen is displayed, and when the accuracy in detection of the gaze direction is low, part of the whole operation screen is magnified and displayed.

In magnification, whether to magnify and display which portion of the operation screen is preferably determined on the basis of the gaze position of the user. That is, an area in the vicinity of the gaze position of the user is preferably magnified by a magnification determined by the accuracy in detection of the gaze direction, and displayed.

In addition, a distance between a plurality of icons aligned and displayed on the operation screen, that is, an interval between the icons may be changed according to the accuracy in detection of the gaze direction. Furthermore, a movement speed of a cursor operated by the gaze of the user, or an input method of information or an input device used to input information by the user may be changed according to the accuracy in detection of the gaze direction.

Furthermore, for a plurality of display areas, when the accuracy in detection of the gaze direction is high, all information may be displayed in one display area, and when the accuracy in detection of the gaze direction is low, information may be displayed by being divided into the plurality of display areas.

In this configuration, when all information is divided and displayed in several display areas, the gaze position of the user, that is, information at which the user gazes can be further accurately identified, even when the accuracy in detection of the gaze direction is low.

Furthermore, for convenience of description, an example of the accuracy in detection of the gaze direction which is determined on the basis of only a distance between a camera and a user, but the accuracy in detection of the gaze direction may be determined by any method such as a weighted sum of a plurality of parameters.

For example, in the example illustrated in Fig. 1, in a case where the camera CA11-6 has a gaze direction detection function, the camera CA11-6 can highly accurately detect the gaze direction of the user U11.

Then, for example, in a case where there is a camera having a gaze direction detection function, that is, a head mounted device having a gaze direction detection function (hereinafter, also referred to as head-mounted gaze detection device) is in cameras used for detection of gaze directions, the accuracy in detection of the gaze direction is high, and in a case where cameras used for detection of the gaze direction include no head-mounted gaze detection device, the accuracy in detection of the gaze direction is low.

In this configuration, when there is a head-mounted gaze detection device and the accuracy in detection of the gaze direction is high, for example, the operation screen IF11 described above is displayed. On the other hand, when all of the cameras used for detection of a gaze direction are only environmental cameras, that is, there is no head-mounted gaze detection device, and the accuracy in detection of the gaze direction is low, the operation screen IF12 is displayed.

### <Example of information processing system>

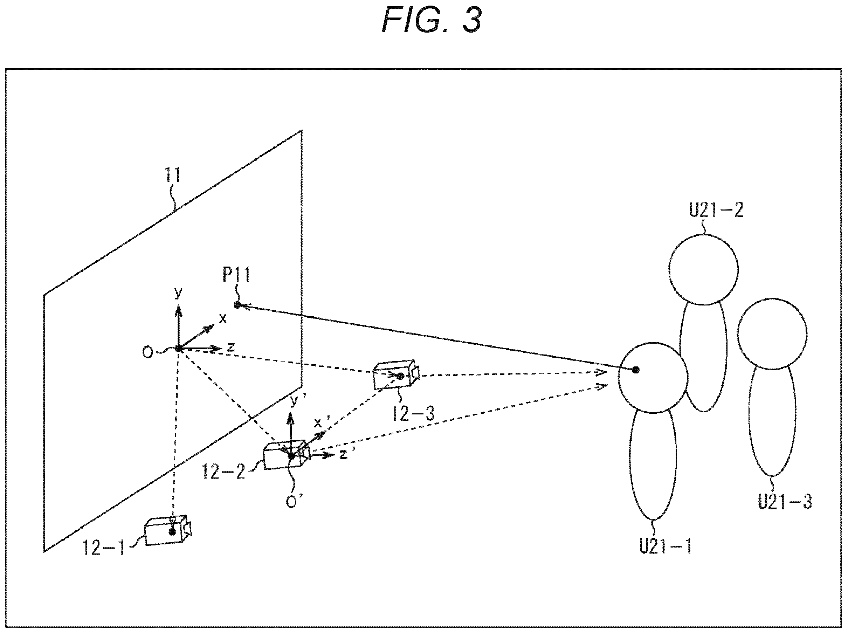

Next, a more specific embodiment of the information processing system described above will be described. Fig. 3 is a diagram illustrating a specific embodiment of an information processing system to which the present technology is applied.

In this example, the information processing system includes a display unit 11 displaying various images, and cameras 12-1 to 12-3 capturing images for detection of a gaze direction of a user. Note that, in a case where there is no need to particularly distinguish between the cameras 12-1 to 12-3, each of the cameras is hereinafter also simply referred to as camera 12.

Each of users U21-1 to U21-3 in a space designates an icon or the like as the object to be operated displayed on the display unit 11 by gaze, while watching a display screen of the display unit 11 as an object to be gazed at, for performance of processing according to the designated icon. In a case where there is no need to particularly distinguish between the users U21-1 to U21-3, each of the users is hereinafter also simply referred to as user U21.

In this information processing system, three cameras 12 are used to determine a gaze direction of each user U21 as the object person from which a gaze direction is to be detected, and accuracy in detection of the gaze direction, for performance of processing according to the gaze direction and the accuracy in detection of the gaze direction.

Specifically, the information processing system determines a gaze direction of each user U21, and the accuracy in detection of the gaze direction, on the basis of each image captured by each camera 12, and changes the operation screen displayed on the display unit 11 according to the obtained accuracy in detection of the gaze direction. The operation screen displayed on the display unit 11 is an UI operated by the gaze of the user U21 as described above.

Then, the information processing system determines the gaze position (gaze point) of the user U21 on the display unit 11, on the basis of the determined gaze direction, and performs processing according to an icon located at the gaze position. For example, in this example, the gaze position of the user U21-1 is determined as a position P11, and the information processing system performs processing according to an icon displayed at the determined position P11.

The processing according to an icon may be any processing such as selection/determination operation of a device to be operated, such as a TV set, or determination operation in replay of image or sound.

Next, a further specific description will be made of detection of a gaze direction or a gaze position, calculation of accuracy in detection of the gaze direction, and processing according to the accuracy in detection of the gaze direction, in such an information processing system. Note that in the following description of the information processing system illustrated in Fig. 3, the user U21 is also simply referred to as user.

### (Recognition of positions and attitudes of cameras)

In the information processing system illustrated in Fig. 3, a global coordinate system is set in the space in which the display unit 11 and the respective users U21 are positioned (hereinafter, also referred to as space to be detected).

In the example of Fig. 3, the global coordinate system has a three-dimensional rectangular coordinate system having an origin O, and an x-axis, a y-axis, and a z-axis perpendicular to each other, and the origin O of the global coordinate system is positioned at the center of the display screen of the display unit 11 having a known position in the global coordinate system.

In the information processing system, the position and attitude of the camera 12 in the global coordinate system are previously set for all cameras 12, before performance of various processing, such as detection of a gaze direction of each user, or processing according to a result of the detection.

Here, the position and attitude of the camera 12 represent the position of the camera 12 arranged in the global coordinate system, and an image capture direction of the camera 12. Specifically, for example, in each camera 12, a camera coordinate system based on the camera 12 is set which has the origin at the camera 12.

In the example illustrated in Fig. 3, for the camera 12-2, a three-dimensional rectangular coordinate system having an origin O' at the camera 12-2, and an x'-axis, a y'-axis, and a z'-axis perpendicular to each other is previously set as the camera coordinate system of the camera 12-2.

In the following description, an origin and axes of a camera coordinate system of any camera, not especially to the camera 12-2, are referred to as origin O', x' axis, y' axis, and z' axis.

For example, in setting a position and attitude of a camera 12, the position of the origin O' of a camera coordinate system defined for the camera 12 is set as the position of the camera 12 in the global coordinate system. Furthermore, the image capture direction is determined by a roll angle, a pitch angle, and a yaw angle of the camera coordinate system defined for the camera 12, and the image capture direction is set as the attitude of the camera 12.

Here, when the directions of the x' -axis, the y' -axis, and the z' -axis of the camera coordinate system are the same as the directions of the x-axis, the y-axis, and the z-axis of the global coordinate system, such a state is defined as a state in which the image capture direction of the camera 12 is oriented in a reference direction.

Here, the roll angle of the camera coordinate system is a rotation angle representing how the camera coordinate system of the camera 12 (image capture direction) is inclined around the z-axis as a rotation axis, relative to the state in which the image capture direction of the camera 12 is oriented in the reference direction, that is, how the camera coordinate system of the camera 12 (image capture direction) is rotated about the z-axis as the rotation axis.

Furthermore, the pitch angle of the camera coordinate system is a rotation angle representing how the camera coordinate system of the camera 12 (image capture direction) is rotated about the x-axis as a rotation axis, relative to the state in which the image capture direction of the camera 12 is oriented in the reference direction.

Similarly, the yaw angle of the camera coordinate system is a rotation angle representing how the camera coordinate system of the camera 12 (image capture direction) is rotated about the y-axis as a rotation axis, relative to the state in which the image capture direction of the camera 12 is oriented in the reference direction.

Note that the position and attitude of the camera 12 may be set for each camera 12 by input from the administrator or the like, or may be set by reading information representing the position and attitude of each camera 12 which is previously recorded.

Furthermore, for part or all of the cameras 12, the position and attitude of the camera 12 may be set by automatic recognition.

As the automatic recognition, for example, an image including a plurality of targets, such as background, having known positions in the global coordinate system is previously captured by a camera 12, and the position and attitude of the camera 12 is determined on the basis of the obtained captured image.

That is, when features are extracted from the captured image, and the positions and attitudes of the objects in the captured image are identified, and the position and attitude of the camera 12 capturing the image, in the global coordinate system can be determined.

Furthermore, as the automatic recognition, a plurality of cameras 12 having known positions and attitudes in the global coordinate system may previously capture images including another cameras 12 to determine the position and attitude of the other camera 12 in the global coordinate system, on the basis of the captured images.

### (Detection of gaze direction of user)

Furthermore, in the information processing system, in order to detect a gaze direction of a user, face recognition processing is performed at first to detect a face of each user as the object person from which a gaze direction is detected, from a captured image, and detect a direction of the face of each user and directions of eyes of the user.

Here, the detection of the face from the captured image may be performed in any manner, such as detection of skin color area, detection of features, or template matching. In this way, on the basis of the position of the face of the user detected from the captured image, that is, on the basis of a face area of the user in the captured image, the direction of the face of the user in the space to be detected, viewed through a camera 12, can be recognized.

Furthermore, the direction of the face of the user in the captured image is detected on the basis of, for example, positions of right and left eyes detected from the face in the face or inclination thereof in the captured image, or inclination of a face contour in the captured image. Furthermore, the directions of the eyes of the user can be identified on the basis of a position or the like of an iris of the corresponding eye in the whole area of the eye of the user, detected in the captured image.

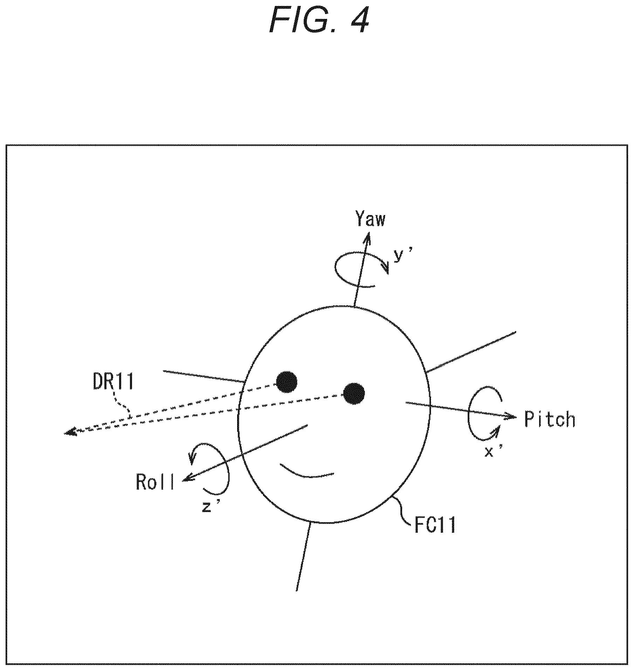

Specifically, for example, as the directions of the face and the eyes of the user in the captured image, information illustrated in Fig. 4 is detected.

In this example, one user FC11 is detected from the captured image, and a roll angle, a pitch angle, and a yaw angle are determined as a direction of a face of the user FC11 relative to the captured image, that is, relative to the camera coordinate system. The roll angle, the pitch angle, and the yaw angle are rotation angles relative to, for example, a reference state in which the user FC11 confronts the camera 12.

That is, the roll angle is a rotation angle of the face of the user FC11 about the z'-axis of the camera coordinate system as a rotation axis, the pitch angle is a rotation angle of the face of the user FC11 about the x'-axis of the camera coordinate system as a rotation axis, and the yaw angle is a rotation angle of the face of the user FC11 about the y'-axis of the camera coordinate system as a rotation axis. Furthermore, directions of eyes of the user FC11 is for example a direction of an iris of the corresponding eye relative to the face of the user FC11.

Accordingly, on the basis of the directions of the face and eyes of the user FC11, the gaze direction of the user FC11 on the captured image, that is, in the camera coordinate system, indicated by arrows DR11 in Fig. 4, are determined.

Furthermore, on the basis of the thus obtained gaze direction of the user FC11 in the camera coordinate system, and the position and attitude of the camera 12, that is, a relationship between the camera coordinate system and the global coordinate system, a gaze direction of the user FC11 in the global coordinate system is determined.

Note that in a case where the face of the user cannot be detected from the captured image by the face recognition processing, a head of the user is detected from the captured image by a technology such as human detection. The position (direction) of the head of the user on the captured image, detected in this way, is used to determine a position of the head of the user in the global coordinate system.

On the other hand, in a case where the face of the user is detected from the captured image by the face recognition processing, for determination of the position of the head of the user in the global coordinate system, the position of the face of the user is used as the position of the head of the user in the captured image.

Furthermore, in a case where, in the face recognition or the like, the user on the captured image can be identified from users previously registered, and there is gaze calibration data for individual user previously registered, the gaze calibration data may be used to determine the gaze direction.

In a case where a gaze direction of a user is detected, a gaze direction determined on the basis of detected directions of the face and eyes may differ from an actual gaze direction, according to each user. Thus, in a case where gaze calibration data is prepared for correction of such difference, the gaze calibration data is used to correct a gaze direction of a user to highly accurately detect the gaze direction of the user.

Furthermore, in a case where a user wears a head-mounted gaze detection device of spectacle type, a gaze direction of the user detected by the head-mounted gaze detection device may be used.

In this case, even when the head-mounted gaze detection device does not serve as a camera 12, a position and attitude of the head-mounted gaze detection device in the global coordinate system is set, as in such a camera 12. Such a configuration enables determination of a gaze direction of a user in the global coordinate system, on the basis of a gaze direction of the user detected by the head-mounted gaze detection device, and the position and attitude of the head-mounted gaze detection device.

In particular, in this configuration, since the head-mounted gaze detection device can highly accurately detect a gaze direction, accurate information can be obtained for a gaze direction of a user in the global coordinate system.

### (Detection of gaze position of user)

When the gaze direction of a user in the global coordinate system is determined as described above, a gaze position of the user in the global coordinate system is further determined.

For determination of the gaze position of the user, it is further required to detect a positional relationship between an object to be gazed at and a head (face) of the user in the global coordinate system, in addition to the gaze direction of the user.

For example, in the example illustrated in Fig. 3, when there are at least two cameras 12 from which captured images including the head of an identical user U21 are obtained, the gaze position of the user U21 can be determined.

For example, regarding the camera 12-2, the gaze position P11 of the user U21-1 is determined on the basis of captured images obtained from the cameras 12-2 and 12-3.

Here, as described above, the display unit 11 as the object to be gazed at has the known position in the global coordinate system. Furthermore, the position and attitude of a camera 12 is set for each of the cameras 12-2 and 12-3.

In addition, a position of the head of the user U21-1, that is, a direction of the head (face) of the user U21-1 viewed through each camera 12, is obtained from each of the basis of the captured images obtained from the cameras 12-2 and 12-3.

In such a condition, on the basis of the position and attitude of the camera 12 about each of the cameras 12-2 and 12-3, and the direction of the head of the user U21-1 viewed through a camera 12, the position of the head of the user U21-1 in the global coordinate system can be identified using the principle of triangulation.

When the position of the head of the user U21-1 is determined in this way, a relationship between the position of the head of the user U21-1 in the global coordinate system, and the position of the display unit 11 as the object to be gazed at is determined. Then, the gaze position P11 of the user U21-1 on the display unit 11 is determined from the positional relationship between the head of the user U21-1 and the display unit 11, and the gaze direction of the user U21-1 in the global coordinate system obtained from the camera 12-2.

Regarding the camera 12-3, a similar manner is also employed. The gaze position of the user U21-1 can be determined on the basis of the positional relationship between the head of the user U21-1 and the display unit 11, and the gaze direction of the user U21-1 in the global coordinate system obtained from the camera 12-3.

As described above, when the position of the head of a user can be detected using at least two cameras 12 of a plurality of cameras 12, and at least one camera 12 can detect the gaze direction of the user, that is, the face of the user, the gaze position of the user can be determined.

### (Improvement of robustness in detection of gaze position)

Note that, in detection of the gaze position of the user, for improvement of robustness in the detection, the position of the head of the user may be estimated on the basis of the captured image, when required.

As described above, for determination of the gaze position of the user in the global coordinate system, at least two cameras 12 are required to detect the position of the head of the user. However, in some cases, for example only one camera 12 may be used to detect the position of the head of the user.

Thus, in such a case, regarding at least one camera 12 which cannot detect the position of the head of the user, a person (user) area may be detected from a captured image obtained from the camera 12, and the position of the head of the user (direction of the head) viewed through the camera 12 may be estimated on the basis of a result of the detection.

In this case, if part of a body of the user enabling estimation of an approximate position where there may be the head of the user can be detected from the captured image, the position of the head of the user in the global coordinate system can be determined, even if the position of the head of the user can be detected only by one camera 12. Therefore, the gaze position of the user can be detected more robustly.

In particular, in a case where the gaze position of the user is detected continuously in time, tracking the face area or body area of the user, using temporally different captured images obtained by the camera 12, enables estimation of the position of the head of the user in the camera coordinate system, even when a face (head) of the user cannot be detected from a captured image of a current frame (time) to be processed.

Furthermore, in a case where there are a plurality of captured images from which a face of a user is detected, one final gaze direction may be determined in any manner, including determining the gaze direction of the user from the plurality of captured images or any one of the captured images.

For example, in a case where there are a plurality of captured images from which a face of a user is detected, a captured image in which the face of the user is maximally directed forward is used to determine the gaze direction of the user. This is because a face of a user directed relatively forward on a captured image enables highly accurate detection of the direction of eyes, that is, the gaze direction, in comparison with the face of the user directed sideward.

In this case, on the basis of the roll angle, the yaw angle, and the pitch angle being information representing the direction of the face of the user obtained from a captured image, a captured image smallest in corresponding angle is selected, and the gaze direction of the user can be determined on the basis of the captured image. Furthermore, as the captured image in which the face of the user is maximally directed forward, an image in which an eye area of the user have a maximum area may be selected.

Furthermore, in a case where gaze directions of an identical user are detected by a plurality of cameras 12, an average value of the gaze directions of the user in the global coordinate system, obtained from the plurality of cameras 12, may be used as a final gaze direction of the user.

Furthermore, in a case where the face of the user is detected only by one camera 12, and no face or head of the user can be detected by the other camera 12, or no position of the head of the user can be estimated, the gaze position of the user may be determined on the basis of a captured image of one camera 12 from which the face of the user is detected. In such a case, the gaze direction of the user is determined in a manner as described above, but the position of a head of the user is determined by a distance measurement method using a monocular camera.

That is, in the distance measurement method using a monocular camera, for example, on the basis of a distance (interval) between both eyes of a user on a captured image, or a distance between features of a face, or the like, a distance between a camera 12 and a head of a user in a space to be detected is determined.

Then, on the basis of the distance determined in this way, the position (direction) of the face of the user on the captured image, and the position and attitude of the camera 12, the position of the head of the user in the global coordinate system is determined. The configuration as described above enables continuous determination of the gaze position of the user at each point of time, although accuracy in detection of the position of the head of the user is reduced, in comparison with use of two or more cameras 12.

### (Accuracy in detection of gaze direction)

Furthermore, when the gaze position of a user is determined as described above, accuracy in detection of the gaze position of the user, that is, accuracy in detection of the gaze direction of the user is calculated.

For example, accuracy in detection of a gaze direction is calculated on the basis of one or more of information items, such as information about the camera 12, information about the positional relationship between the camera 12 and the user, or information about the captured image.

Specifically, for example, the accuracy in detection of the gaze direction is calculated, on the basis of at least one of distance information W11, face direction information W12, resolution information W13, brightness information W14, focusing degree information W15, detection device information W16, and gaze duration information W17, that is, on the basis of part or all of the distance information W11 to the gaze duration information W17.

Here, the distance information W11 is information representing a distance from a camera 12 to a user in a space to be detected, and accuracy in detection of a gaze direction is increased with decreasing distance represented by the distance information W11. A distance between a camera 12 and a user may be calculated on the basis of a position of the camera 12 in the global coordinate system and a position of the head of the user, or on the basis of a size of an eye area of the user in a captured image.

Furthermore, the face direction information W12 is information representing the direction of a face of a user relative to a camera 12, more specifically, information representing likelihood of forward direction of the face of the user. For example, a value of the face direction information W12 is calculated on the basis of the roll angle, the pitch angle, the yaw angle, and the like representing the direction of the face of the user, and the value increases as the face of the user is directed toward the front, toward the camera 12. Accordingly, the accuracy in detection of the gaze direction increases with increasing value of the face direction information W12.

The resolution information W13 is information representing resolution of a camera 12, that is, the resolution of a captured image, and a value of the resolution information W13 increases with increasing resolution of the camera 12. The directions of the eyes, the direction of the face, or the like of the user can be highly accurately detected from a captured image as the resolution of the camera 12 is increased, and the accuracy in detection of the gaze direction increases with increasing resolution information W13.

The brightness information W14 information representing brightness of an image capture environment of a captured image, that is, the brightness of the captured image. A value of the brightness information W14 is determined, for example, on the basis of an average brightness of all pixels of the captured image, and the value of the brightness information W14 increases with increasing brightness of the captured image. The directions of the eyes of the user or the like can be accurately detected from the captured image as the brightness of the captured image increases, and thus, the accuracy in detection of the gaze direction increases with increasing brightness information W14.

Furthermore, the focusing degree information W15 is information representing degree of blur of the face area of the user in a captured image. A value of the focusing degree information W15 is calculated for example by performing edge detection on the captured image, and the value decreases as an edge strength of the face area of the user is small and the face area blurs. The directions of the eyes, the direction of the face, or the like of the user can be highly accurately detected as the degree of blur of the face area of the user decreases, and the accuracy in detection of the gaze direction increases with increasing focusing degree information W15.

The detection device information W16 is information representing reliability of accuracy in detection of a gaze direction of a camera 12, and a value of the detection device information W16 is determined whether the camera 12 has a head-mounted gaze detection device.

For example, in a case where the camera 12 is a head-mounted gaze detection device, that is, in a case where a gaze direction of a user which is detected by the head-mounted gaze detection device as the camera 12 is used for the gaze direction of the user viewed through the camera 12, a predetermined value is determined as the value of the detection device information W16.

On the other hand, in a case where the camera 12 is not the head-mounted gaze detection device, the value of the detection device information W16 is a value smaller than the value of the detection device information W16 determined for the camera 12 as the head-mounted gaze detection device.

In a case where the camera 12 is a head-mounted gaze detection device, a gaze direction of a user can be detected with higher accuracy, and the accuracy in detection of the gaze direction increases with increasing value of the detection device information W16.

Furthermore, the gaze duration information W17 is information representing a time period (gaze duration) in which the user gazes at the same gaze position. For example, the gaze duration information W17 is calculation the basis of displacement (variation amount) of a gaze position or a gaze direction of an identical user in a time direction, and a value of the gaze duration information W17 increases with increasing time period in which the displacement of the gaze position or gaze direction is not larger than a threshold, that is, with increasing gaze duration.

For example, in movement of a cursor on the UI by user's gaze, when the cursor is located at a position intended by the user, the gaze duration of user's gaze at a specific position increases, since the user does not move the cursor. In such a condition, the gaze position, that is, the gaze direction of the user should be detected correctly, so that the accuracy in detection of the gaze direction increases with increasing value of the gaze duration information W17.

In the information processing system, at least one of the distance information W11 to the gaze duration information W17 is used to calculate accuracy in detection of a gaze direction for each user. For example, the accuracy in detection of the gaze direction is calculated by a weighted sum of the distance information W11 to the gaze duration information W17. In this case, for example, when the gaze direction is detected, it is considered that a weight of the distance information W11 being more influential is increased relative to the other information items. Note that calculation of the accuracy in detection of the gaze direction is not limited to the example using the distance information W11 to the gaze duration information W17, and may be performed using any other information.

### (Processing according to accuracy in detection of gaze direction)

Furthermore, when the accuracy in detection of the gaze direction of each user is calculated, the information processing system changes a display mode (display pattern) of the UI to be displayed on the display unit 11 according to the accuracy in detection of the gaze direction of each user.

For example, in the information processing system, while an operation screen as the UI is displayed on the display unit 11, an icon located at the gaze position of the user is selected, and processing is performed according to the icon.

At this time, for example, the information processing system displays the operation screen IF11 illustrated in Fig. 2, in a case where the accuracy in detection of the gaze direction (gaze position) of a user is not less than a predetermined threshold th, and displays the operation screen IF12 illustrated in Fig. 2, in a case where the accuracy in detection of the gaze direction is less than the predetermined threshold th. Then, on the basis of the detected gaze position of the user, an icon displayed at the gaze position is selected, or other processing according to the gaze position is performed.

Note that in a case where there is a plurality of users as the object person from which a gaze direction is detected, for example, a display mode of the operation screen on the display unit 11 can be changed, as described below

That is, in a case where the accuracy in detection of the gaze directions of all the plurality of users are not less than the threshold th, the operation screen IF11 illustrated in Fig. 2 is displayed. Furthermore, in a case where the accuracy in detection of the gaze directions of all the plurality of users are less than the threshold th, the operation screen IF12 illustrated in Fig. 2 is displayed.

Then, in a case where there are a user having an accuracy in detection of the gaze direction not less than the threshold th, and a user having an accuracy in detection of the gaze direction less than the threshold th, the display mode of the operation screen is determined according to the accuracy in detection of the gaze direction of a user gazing at the display unit 11 first.

That is, in a case where the user gazing at the display unit 11 first has an accuracy in detection of the gaze direction not less than the threshold th, the operation screen IF11 is displayed, and in a case where the user gazing at the display unit 11 first has an accuracy in detection of the gaze direction less than the threshold th, the operation screen IF12 is displayed.

In addition, in a case where there are a user having an accuracy in detection of the gaze direction not less than the threshold th, and a user having an accuracy in detection of the gaze direction less than the threshold th, the display mode of the operation screen may be determined, according to the accuracy in detection of the gaze direction of a user having a maximum gaze duration, the display mode of the operation screen may be determined, according to the accuracy in detection of the gaze direction of a user located at a position closest to the display unit 11, and the display mode of the operation screen may be determined, according to an average value or a weighted sum value of accuracy in detection of the gaze directions of all the users.

Furthermore, the display mode of the operation screen may be determined according to a result of comparison between the accuracy in detection of the gaze direction and the threshold th for more users, when comparing the number of users having an accuracy in detection of the gaze direction not less than the threshold th, with the number of users having an accuracy in detection of the gaze direction less than the threshold th.

Furthermore, for performance of processing according to the gaze position of the user, one of users may be selected as an object user for processing to perform processing according to the gaze position of the selected user.

In performance of the processing, a user as the object user for processing may be displayed on the display unit 11. Furthermore, a user having a maximum gaze duration may be selected as the object user for processing, or a user wearing no wearable device having a display function of displaying an image the same as an image displayed on the display unit 11 may be preferentially selected as the object user for processing.

Furthermore, a cursor or the like operated by each user may be displayed on the display unit 11, for each user so that processing is performed according to selection operation by a gaze (gaze position) of each user. In such a configuration, for example, in a case where the cursor is moved by each user, and an icon is selected using the cursor, processing such as reproducing a moving image may be performed according to the selected icon, at an area where the icon is displayed.

### <More detailed exemplary configuration of information processing system>

Next, a more detailed exemplary configuration of the information processing system described above will be described.

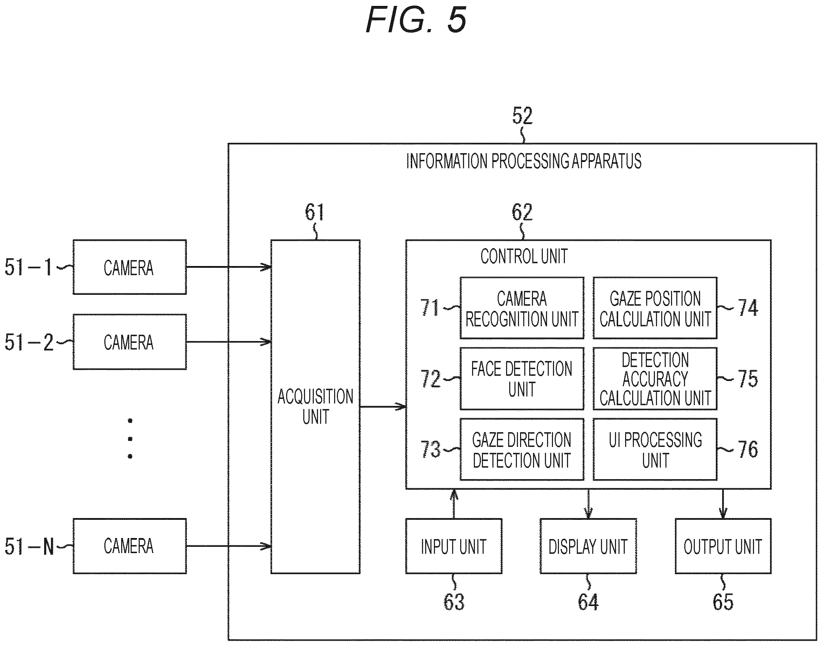

Fig. 5 is a diagram illustrating the more detailed exemplary configuration of an information processing system to which the present technology is applied. The information processing system illustrated in Fig. 5 includes cameras 51-1 to 51-N, and an information processing apparatus 52.

The cameras 51-1 to 51-N corresponds to the cameras 12 illustrated in Fig. 3, capture images of users in a space to be detected as objects, and supplies the obtained captured images to the information processing apparatus 52 connected thereto in a wired or wireless manner.

Note that, in a case where there is no need to particularly distinguish between the cameras 51-1 to 51-N, each of the cameras is hereinafter also simply referred to as camera 51.

A camera 51 may be fixed on a floor, a ceiling, or the like of the space to be detected, as described above, or may be moved when required. Furthermore, for example, a camera 51 may be a wearable camera worn by a user in the space to be detected, or a head-mounted gaze detection device capturing an image of a user wearing the head-mounted gaze detection device, and detecting a gaze direction of the user.

The information processing apparatus 52 detects a gaze direction of a user on the basis of a captured image supplied from a camera 51, and calculates accuracy in detection of the gaze direction or the gaze position of the user. Furthermore, the information processing apparatus 52 changes a display mode of a UI according to accuracy in detection of the gaze direction of the user, and performs processing according to the gaze position of the user.

The information processing apparatus 52 includes an acquisition unit 61, a control unit 62, an input unit 63, a display unit 64, and an output unit 65.

The acquisition unit 61 acquires captured images from the cameras 51 in a wired or wireless manner, and supplies the captured images to the control unit 62. Furthermore, in a case where a camera 51 is a head-mounted gaze detection device having a gaze direction detection function, the acquisition unit 61 acquires a result of detection of a gaze direction of a user from the camera 51, and supplies the result to the control unit 62.

The control unit 62 controls operation of the information processing apparatus 52 as a whole. For example, the control unit 62 detects a gaze direction or a gaze position of a user, on the basis of a captured image supplied from the acquisition unit 61, or calculates accuracy in detection of the gaze direction, on the basis of the captured image or the like. Furthermore, the control unit 62 performs processing according to information from the input unit 63, a result of detection of the gaze position, accuracy in detection of a gaze direction, or the like.

The control unit 62 includes a camera recognition unit 71, a face detection unit 72, a gaze direction detection unit 73, a gaze position calculation unit 74, a detection accuracy calculation unit 75, and a UI processing unit 76.

The camera recognition unit 71 recognizes a position and attitude of each camera 51, on the basis of information supplied from the input unit 63 or a captured image supplied from the acquisition unit 61.

The face detection unit 72 detects a face or head of a user as the object person from which a gaze direction is detected, from a captured image obtained from each camera 51, or determines a position of the head of the user by estimation, on the basis of an area of part of a body of the user detected from the captured image.

The gaze direction detection unit 73 detects, for each camera 51, a gaze direction of each user as the object person from which a gaze direction is detected, on the basis of a position and attitude of each camera 51, a captured image supplied from the acquisition unit 61, and a result of face detection by the face detection unit 72.

Note that in a case where the acquisition unit 61 acquires the result of detection of the gaze direction of the user, from the camera 51 having the gaze direction detection function, a gaze direction detection block constituting the camera 51 also functions as the gaze direction detection unit 73.

The gaze position calculation unit 74 calculates a gaze position of each user, on the basis of the position and attitude of each camera 51 and a result of detection of the gaze direction of the user.

The detection accuracy calculation unit 75 calculates accuracy in detection of a gaze direction, for a result of detection of a gaze direction of each user, on the basis of the position and attitude of a camera 51, information obtained upon detection of the gaze direction of the user, a captured image supplied from the acquisition unit 61, or the like.

The UI processing unit 76 controls the display unit 64 according to accuracy in detection of a gaze direction of a user, and causes the display unit 64 to display an image such as UI.

The input unit 63 includes for example a mouse or a keyboard, or a controller wirelessly connected to the control unit 62, and supplies, to the control unit 62, a signal according to operation of the object person from which a gaze direction is detected, an administrator of an information processing system, or the like.

Furthermore, the input unit 63 may include a microphone or the like to acquire sound of the object person from which a gaze direction is detected, or the like, and supply an audio signal thus obtained to the control unit 62. In this configuration, the control unit 62 performs sound recognition processing on the audio signal supplied from the input unit 63, and performs processing according to a result of the voice recognition processing.

The display unit 64 includes for example a liquid crystal display device, and displays an image such as UI according to control of the control unit 62. The display unit 64 corresponds to the display unit 11 illustrated in Fig. 3. The output unit 65 includes, for example, a speaker, and outputs sound according to control of the control unit 62.

### <Description of UI display process>

Next, operation of the information processing system illustrated in Fig. 5 will be described.

When the administrator or the like gives instructions for performance of processing according to a gaze position of a user, the information processing system starts capturing images of the user by cameras 51. Then, the cameras 51 sequentially supply captured images to the information processing apparatus 52. Furthermore, the information processing apparatus 52 performs a UI display process to switch the display mode of the UI according to accuracy in detection of the gaze direction of a user, and perform processing according to the gaze position of the user.

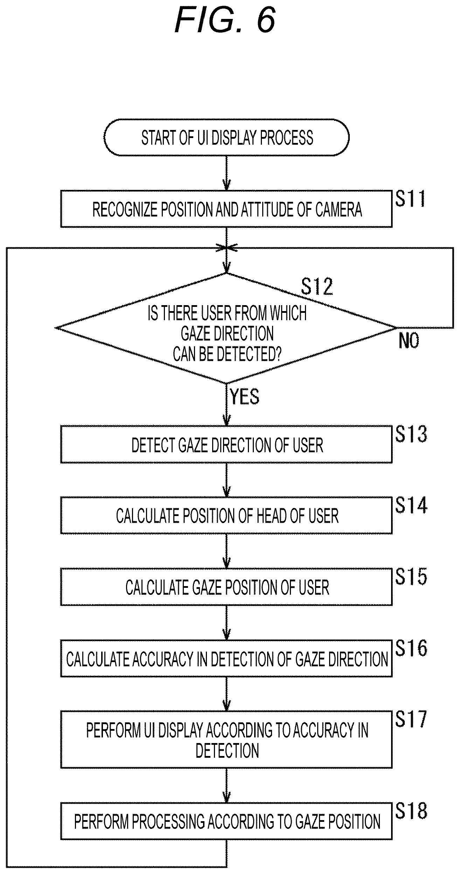

The UI display process performed by the information processing apparatus 52 constituting the information processing system will be described below with reference to a flowchart of Fig. 6.

In step S11, the camera recognition unit 71 recognizes the position and attitude of each camera 51, and sets a result of the recognition as the position and attitude of the camera 51.

For example, the administrator of the information processing system operates the input unit 63, to input a position of each camera 51 in the global coordinate system, and a roll angle, a pitch angle, and a yaw angle in a camera coordinate system for each camera 51, as the position and attitude of each camera 51.

Here, the camera recognition unit 71 sets, as the position and attitude of the camera 51, the position of the camera 51 in the global coordinate system, and the roll angle, the pitch angle, and the yaw angle of the camera 51 in the camera coordinate system, which are supplied from the input unit 63.

In addition, the camera recognition unit 71 may read a position and attitude of each camera 51 from a memory not illustrated to set the position and attitude of the camera 51. Furthermore, as described in the above automatic recognition, the camera recognition unit 71 may previously detect a position (direction) of a target having a known position, from a captured image supplied from the acquisition unit 61, and recognize a position and attitude of a camera 51 on the basis of a result of the detection.

Furthermore, on the basis of captured images obtained from a plurality of cameras 51 having known positions and attitudes, positions and attitudes of another camera 51 may be recognized.

In step S12, the gaze direction detection unit 73 determines whether there is a user from which a gaze direction, more specifically, a gaze position can be detected, in object persons from which gaze directions are detected, on the basis of the captured images supplied from the acquisition unit 61.

For example, in a case where, for a predetermined user, cameras 51 include at least two cameras 51 usable for detecting a position of a head of the predetermined user, and at least one camera 51 for detecting directions of eyes (gaze direction) of the predetermined user, the gaze direction of the predetermined user can be detected.

Here, the camera 51 usable for detecting a position of a head of the user represents a camera 51 from which an image is obtained by capturing image including the head of the user, or part of a body of the user enabling estimation of the position of the head of the user.

Furthermore, the camera 51 for detecting directions of eyes (gaze direction) of the user represents a camera 51 from which an image is obtained by capturing image including a face of the user, or a camera 51 having a gaze direction detection function.

Accordingly, more specifically, the determination of whether there is a user from which a gaze direction can be detected requires a result of detection of the head or face area of the user from a captured image, and, in fact, step S12 is performed in parallel with part of step S13 described later.

Note that in a case where the captured image including the face of the user is obtained from a predetermined camera 51, the predetermined camera 51 can be used for detection of the head (face) position, in addition to detection of the directions of the eyes of the user. Therefore, in this case, when another camera 51 can detect the position of the head of the user, the gaze direction of the user can be detected.

Furthermore, in a case where a gaze direction of a user viewed through a camera 51 having a gaze direction detection function or a head-mounted gaze detection device is obtained from the camera 51 or the head-mounted gaze detection device, a gaze direction of the user in the global coordinate system can be detected, since the positions and attitudes of the camera 51 and the head-mounted gaze detection device are set.

In a case where it is determined that there is no user from which a gaze direction can be detected, in step S12, that is, in a case where a gaze direction of any user cannot be detected, the process returns to step S12, and the above process is repeatedly performed.

On the other hand, in a case where it is determined in step S12 that there is the user from which a gaze direction can be detected, the gaze direction detection unit 73 detects, for each camera 51, the gaze direction of each user from which a gaze direction can be detected, in step S13. Note that, more specifically, a gaze direction of a user is detected from each camera 51 providing a captured image from which a face area of a user is detected.

That is, the face detection unit 72 performs face recognition processing on the captured image supplied from the acquisition unit 61, and detects the face area of the user from the captured image. Furthermore, the gaze direction detection unit 73 detects a direction of the face of the user and directions of eyes of the user in the captured image, on the basis of a result of detection of the face area by the face detection unit 72.

Then, the gaze direction detection unit 73 determines the gaze direction of the user in the camera coordinate system, on the basis of the direction of the face of the user and the directions of the eyes of the user. Furthermore, the gaze direction detection unit 73 calculates the gaze direction of the user in the global coordinate system, on the basis of the gaze direction of the user in the camera coordinate system and the position and attitude of the camera 51.

Note that, here, calculation of the gaze direction of the user performed for each camera 51 is described, but the gaze direction of the user may be calculated only for a camera 51 providing a captured image in which the face of the user is maximally directed forward, as described above.

Furthermore, for example, a gaze direction of a user viewed from a camera 51 having a gaze direction detection function (or head-mounted gaze detection device) is obtained from the camera 51 (or head-mounted gaze detection device). In such a case, the gaze direction detection unit 73 calculates the gaze direction of the user in the global coordinate system, on the basis of the obtained gaze direction of the user, and the position and attitude of the camera 51 (or the head-mounted gaze detection device).

For a camera 51 providing a captured image from which no face area of the user is detected, the face detection unit 72 detects the head of the user from the captured image obtained from the camera 51, and determines the position of the head of the user on the captured image, that is, a direction of the head of the user in the camera coordinate system.

Furthermore, in a case where the head of the user is not detected from the captured image at that time, the face detection unit 72 detects part of a body of the user from the captured image, and determines the position of the head of the user (direction of the head of the user in the camera coordinate system) on the basis of a result of the detection, by estimation.

In step S14, for each user from which a gaze direction can be detected, the gaze position calculation unit 74 calculates a position of the head of the user in a space to be detected, that is, a position of the head of the user in the global coordinate system.

For example, the gaze position calculation unit 74 calculates the position of the head of the user in the global coordinate system, using the principle of triangulation, on the basis of the position of the head of the user (face position) obtained by detection or estimation from each of at least two captured images, that is, the direction of the head in the camera coordinate system, and the positions and attitudes of the cameras 51 capturing the images.

In step S15, for each user from which a gaze direction can be detected, the gaze position calculation unit 74 calculates the gaze position of the user, on the basis of a result of detection of the gaze direction of the user, a result of calculation of the position of the head of the user, and a position of the display unit 64 as the object to be gazed at on the space to be detected.

Here, as the gaze direction of the user, any of the gaze directions of the users obtained in step S13 may be used. For example, as described above, an average value of the gaze directions of an identical user obtained from respective cameras 51 may be used as a final gaze direction of the user. Furthermore, a gaze direction having a maximum accuracy in detection of the gaze directions may be used as the final gaze direction of the user.

In step S16, for the gaze direction of each user, the detection accuracy calculation unit 75 calculates the accuracy in detection of the gaze direction, on the basis of the position and attitude of the camera 51, information obtained upon detection of the gaze direction of the user from one or more of cameras 51, the captured image from the acquisition unit 61, or the like.

Specifically, for example, the detection accuracy calculation unit 75 calculates any of the distance information W11 to the gaze duration information W17, as the accuracy in detection of the gaze direction, or calculates a value obtained by a weighted sum of some of the distance information W11 to the gaze duration information W17, as the accuracy in detection of the gaze direction.

Note that in a case where the average value of the gaze directions of the user obtained from the plurality of cameras 51 is used for the final gaze direction of the user, accuracy in detection of gaze directions may be determined on the bases of gaze directions for each camera 51 to define an average value of the accuracy in detection of the gaze directions as the final accuracy in detection of the gaze direction.

In step S17, on the basis of the accuracy in detection of the gaze direction determined for each user, the UI processing unit 76 performs UI display according to the accuracy in detection of the gaze direction.

For example, the UI processing unit 76 compares the accuracy in detection of the gaze direction determined for each user as described above, and the threshold th with each other, and controls the display unit 64 according to a result of the comparison to display the operation screen IF11 illustrated in Fig. 2, or display the operation screen IF12 illustrated in Fig. 2. As described above, the operation screen more easily operated can be displayed according to accuracy in detection of a gaze direction and usability is improved.

In step S18, the control unit 62 performs processing according to the gaze position of the user.

For example, the control unit 62 causes the display unit 64 to display an image, or causes the output unit 65 to output sound, according to an icon or a button located at the gaze position of the user on the operation screen displayed on the display unit 64. In addition, the processing according to the gaze position of the user may be any processing such as starting replay, replay and stop, and fast-forward of sound or a moving image.

Here, in a case where the gaze position is determined for a plurality of users, processing may be performed for the gaze positions of all users, or processing may be performed according to several gaze positions of the gaze positions of all users.

For example, in a case where one gaze position is selected from the gaze positions of the plurality of users, a gaze position of a predetermined specific user, a gaze position of a user having a maximum gaze duration, a gaze position of a user wearing no wearable device having a display function, or the like may be selected preferentially. Furthermore, in a case where several gaze positions of several users are located at the same position, a position at which the most users gaze may be selected as the gaze position for performing corresponding processing.

When the processing is performed according to the gaze position of the user in this way, the process returns to step S12, and the above process is repeatedly performed. Then, when instructions are given for termination of performance of the processing according to the gaze position of the user, the UI display process is finished.

As described above, the information processing apparatus 52 detects a gaze direction of a user on the basis of the captured image, calculates the accuracy in detection of the gaze direction, and performs processing according to the accuracy in detection of the gaze direction. As described above, owing to switching or the like of the display mode of the UI according to the accuracy in detection of the gaze direction, usability can be improved.

### <Second embodiment>

### <UI display according to accuracy in detection of gaze direction>

Note that, in the above description, as the UI display according to accuracy in detection of a gaze direction, the example of displaying the operation screens having the objects to be operated, such as icons, different in quantity or size has been described, as illustrated in Fig. 2, but any other UI display may be performed.

For example, in a case where the accuracy in detection of the gaze direction is fully high, the UI display is performed in a predetermined display mode, and when the accuracy in detection of the gaze direction is less than a predetermined threshold, only several objects to be operated, such as icons, in the vicinity of the gaze position of the user may be displayed.

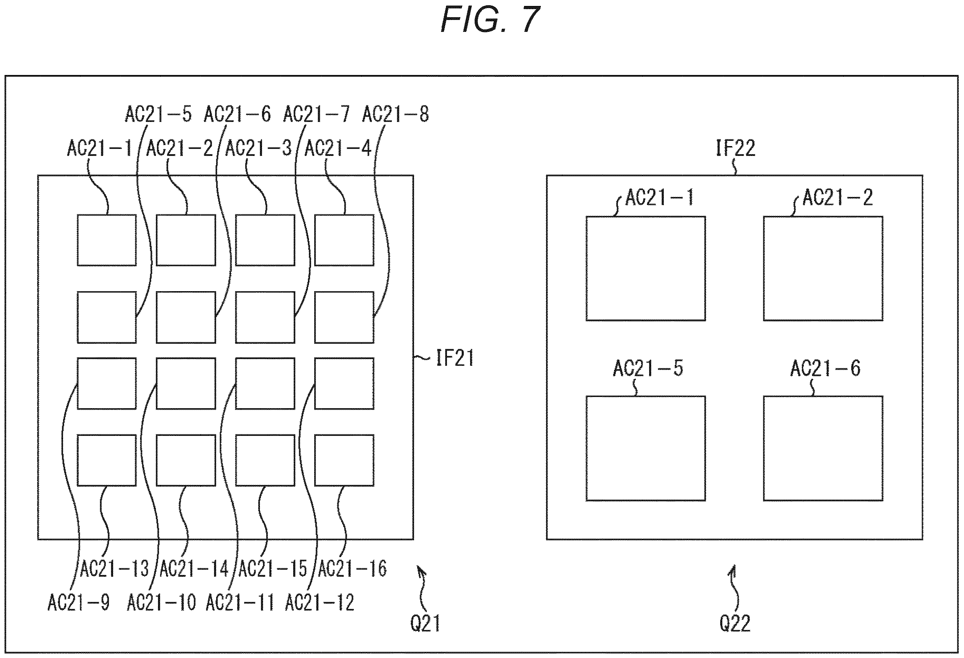

In such a condition, for example, the display mode of the operation screen as the UI is switched, as illustrated in Fig. 7. That is, while the accuracy in detection of the gaze direction of the user is not less than the predetermined threshold th, an operation screen IF21 indicated by an arrow Q21 is displayed on the display unit 64.

On the operation screen IF21, 16 icons AC21-1 to AC21-16 as the objects to be operated are aligned and displayed.

Note that, in a case where there is no need to particularly distinguish between the icons AC21-1 to AC21-16, each of the icons is hereinafter also simply referred to as icon AC21.

In this example, in a case where the icon AC21 is located at the gaze position of the user, the icon AC21 is considered to be specified by the gaze of the user, and processing is performed according to the icon AC21 located at the gaze position.

When the accuracy in detection of the gaze direction of the user, that is, the accuracy in detection of the gaze position of the user is not less than the threshold th, and is fully high, it can be accurately identified whether the user gazes at which icon AC21, even when a larger number of icons AC21 are displayed on the operation screen IF21,

However, when the accuracy in detection of the gaze direction of the user is reduced, the detected gaze position of the user differs from the actual position at which the user gazes. Then, for example false detection of the icon AC21 may occur.

Thus, when the accuracy in detection of the gaze direction of the user is less than the threshold th, the information processing system magnifies and displays the vicinity of the gaze position of the user.

For example, while the operation screen IF21 is displayed, the gaze position of the user is in the vicinity of the icon AC21-1. In this situation, the gaze position of the user is in the vicinity of the icon AC21-1 but the accuracy in detection of the gaze direction of the user changes less than the threshold th, in the next moment.

In such a condition, since the accuracy in detection of the gaze direction is insufficient, it cannot be accurately identified whether the user specifies (selects) the icon AC21-1 by the gaze, or whether the user specifies another icon AC21.

Then, for example, the information processing system causes the display unit 64 to display an operation screen IF22 on which only icons AC21 in the vicinity of the icon AC21-1 are magnified and displayed, as indicated by an arrow Q22. On the operation screen IF22, four icons, that is, the icon AC21-1, the icon AC21-2, the icon AC21-5, and the icon AC21-6, are magnified and displayed at increased intervals in comparison with those on the operation screen IF21.

Since the four icons AC21 displayed in this way are positioned in the vicinity of the gaze position of the user, the four icons AC21 are highly probably the icon AC21 which the user intends to operate (specify) . In other words, it can be said that the four icons AC21 are candidates for the icon AC21 corresponding to the gaze position of the user.

As described above, in a case where the accuracy in detection of the gaze direction of the user is insufficient, only several icons AC21 positioned in the vicinity of the gaze position are displayed as the candidates for operation, from among a plurality of icons AC21 displayed as the objects to be operated, and false detection can be prevented and usability can be improved.

### <Description of UI display process>

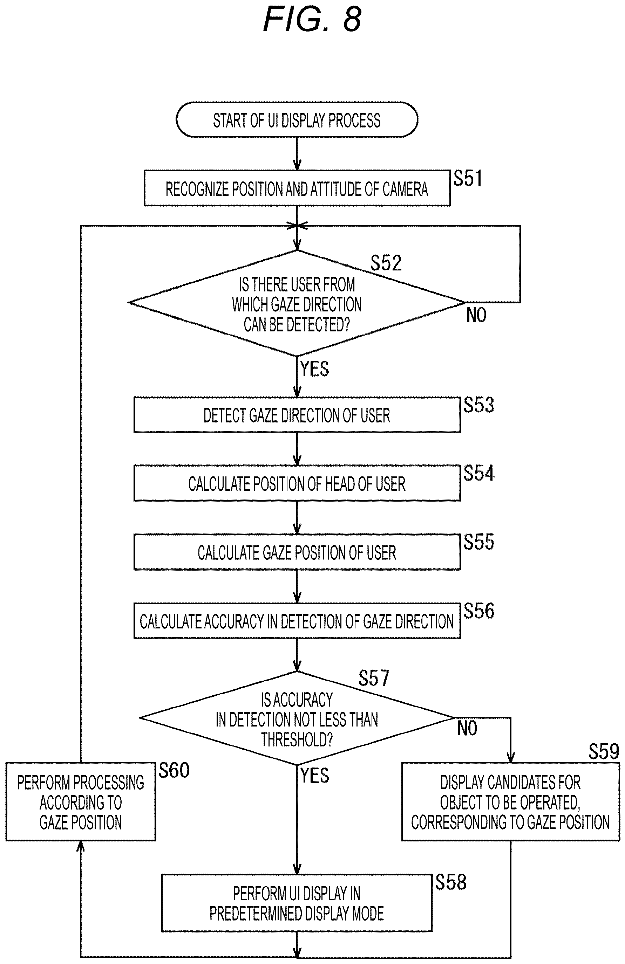

Next, a UI display process performed by the information processing apparatus 52 upon performance of the UI display illustrated in Fig. 7 will be described with reference to a flowchart of Fig. 8.

Note that steps S51 to S56 are similar to steps S11 to S16 of Fig. 6, and description thereof will be omitted.

In step S57, the UI processing unit 76 determines whether the accuracy in detection of the gaze direction is not less than the predetermined threshold th, on the basis of the accuracy in detection of the gaze direction determined for each user.

For example, in a case where a gaze position of one user is selected, and processing according to the selected gaze position is performed, in the information processing apparatus 52, it is preferably determined whether the accuracy in detection of the gaze direction of the user having the gaze position selected is not less than the threshold th.

Furthermore, for example, in a case where accuracy in detection of the gaze directions of all users, an average value or a weighted sum value of the accuracy in detection of the gaze directions of all users, or accuracy in detection of the gaze directions of more than half of the users of the accuracy in detection of the gaze direction of all user are not less than the threshold th, the accuracy in detection of the gaze direction may be determined to be not less than the threshold th, in step S57.

In a case where the accuracy in detection of the gaze direction is determined to be not less than the threshold th in step S57, the UI processing unit 76 performs UI display in a predetermined display mode, in step S58.

That is, for example, the UI processing unit 76 controls the display unit 64 to display the operation screen IF21 illustrated in Fig. 7 as the UI.

When the UI display is performed in the predetermined display mode in step S58, the process proceeds to step S60.

On the other hand, in a case where the accuracy in detection of the gaze direction is determined to be less than the threshold th in step S57, the UI processing unit 76 displays candidates for an object to be operated, corresponding to the gaze position of the user, in step S59.

For example, the UI processing unit 76 controls the display unit 64 to switch the UI display on the display unit 64 to display only objects to be operated positioned in the vicinity of a gaze position of one predetermined user. Therefore, for example, the display is switched from a state in which the operation screen IF21 of Fig. 7 is displayed, to a state in which the operation screen IF22 is displayed.

Note that the example in which icons AC21 positioned in the vicinity of the gaze position of one user are displayed as the candidates have been described here, but as long as a reduced number of icons AC21, as the candidates for the object to be operated, are displayed in larger size, the icons AC21 to be displayed may be selected in any manner. For example, icons AC21 positioned in the vicinity of an area at which more users gaze, that is, in the vicinity of an area at which there are more gaze positions of users are displayed as the candidates.

Furthermore, for example, when a gaze position of a user of interest is in the vicinity of the icon AC21-1 on the operation screen IF21 illustrated in Fig. 7, the UI processing unit 76 may cause the display unit 64 to display a confirmation screen for confirming whether the object to be operated which is intended by the user is the icon AC21-1, in step S59.

In this configuration, for example, when it is confirmed by the user' s operation that the object to be operated which is intended by the user is the icon AC21-1, processing according to the icon AC21-1 is performed. On the other hand, when it is confirmed by user's operation that the object to be operated which is intended by the user is not the icon AC21-1, the display is switched to, for example, the operation screen IF22 illustrated in Fig. 7.

When switching of the UI display is performed in step S59, then, the process proceeds to step S60.

After the UI display is performed in step S58 or S59, step S60 is then performed, but step S60 is similar to step S18 of Fig. 6, and description thereof will be omitted.

Furthermore, when step S60 is performed, the process returns to step S52, and the above process is continuously performed repeatedly, until instructions are given for termination of performance of processing according to the gaze position of the user. Then, when instructions are given for termination of performance of the processing according to the gaze position of the user, the UI display process is finished.

As described above, the information processing apparatus 52 detects a gaze direction of a user from a captured image, calculates accuracy in detection of the gaze direction, and when the accuracy in detection of the gaze direction is insufficient, switches the display mode of the UI display so that only objects to be operated which are positioned in the vicinity of the gaze position are displayed as the candidates. As described above, the display mode of the UI display is switched according to the accuracy in detection of the gaze direction, and false detection or the like can be prevented and usability can be improved.

### <Third embodiment>

### <Recognition of positions and attitudes of cameras>

Furthermore, as described above, when the positions and attitudes of cameras are recognized (set), a camera having a known position and attitude in the global coordinate system may be used to recognize a position and attitude of another camera.

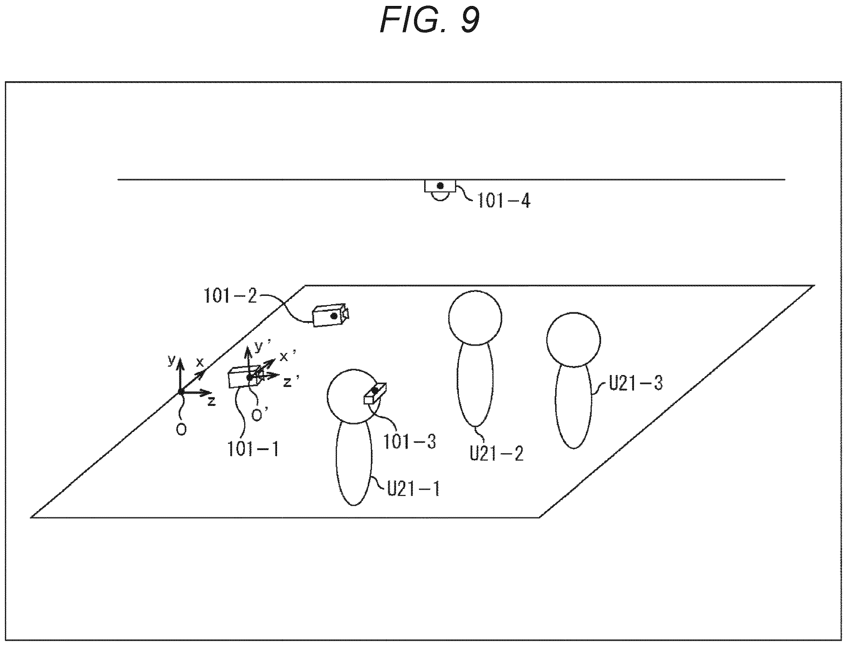

In such a case, for example, the cameras are arranged as illustrated in Fig. 9. Note that, in Fig. 9, portions corresponding to those in Fig. 3 are denoted by the same reference signs, and description thereof will be appropriately omitted.

In an example illustrated in Fig. 9, cameras 101-1 to 101-4 are arranged as cameras for capturing images instead of the cameras 12 of Fig. 3. Note that, in a case where there is no need to particularly distinguish between the cameras 101-1 to 101-4, each of the cameras is hereinafter also simply referred to as camera 101.

In this example, the cameras 101-1 and 101-2 are fixed on a floor of a space to be detected, the camera 101-3 is a wearable camera mounted to the head of the user U21-1. and having a gaze direction detection function. Therefore, the camera 101-3 captures an image of another user U21-2 or U21-3, or the like, different from the user U21-1, as an object.

Furthermore, the camera 101-4 is a wide angle camera fixed on a ceiling of the space to be detected. This camera 101-4 is a camera having a known position and attitude, and capable of capturing an image of the whole space to be detected. Furthermore, for example, the camera 101-1 is also a camera having a known position and attitude, and capable of capturing an image of the whole space to be detected.

Accordingly, images captured by the cameras 101-1 and 101-4 always includes the other cameras 101-2 and 101-3 as the objects.

In the camera recognition unit 71 of the information processing apparatus 52, positions and attitudes of the cameras 101-2 and 101-3 are recognized on the basis of images captured by the cameras 101-1 and 101-4, and the positions and attitudes of the cameras 101-1 and 101-4, previously known, in step S11 of Fig. 6 or step S51 of Fig. 8.

In a case where cameras 101 having known positions and attitudes in the global coordinate system are used in this way to recognize the positions and attitudes of the other cameras 101 in the global coordinate system, the positions and attitudes of the cameras 101 can be accurately recognized, even if the position or the like of a camera 101 is changed.

### <Fourth embodiment>

### <Other examples of information processing system>

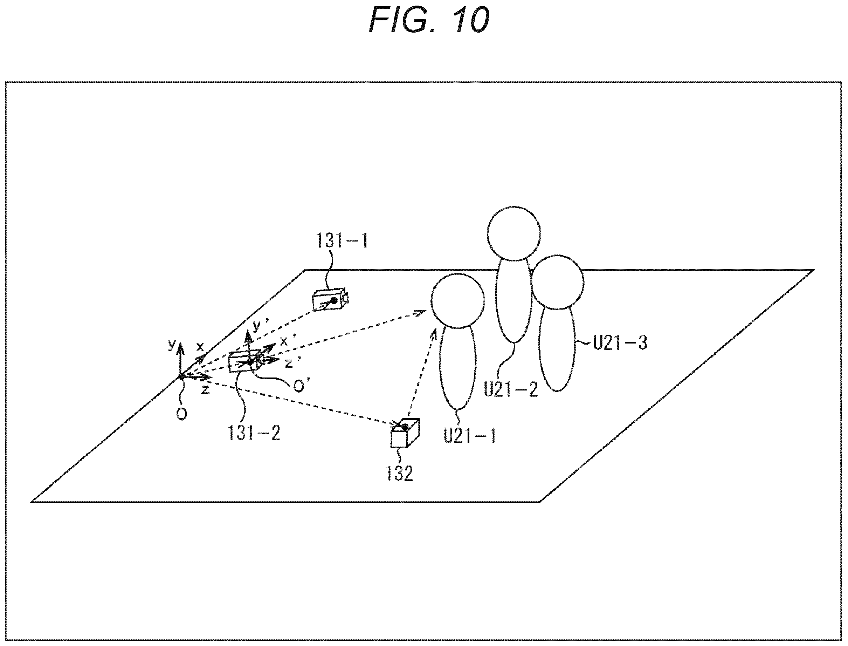

Furthermore, in the above, the example in which the UI display is performed on the display unit as the object to be gazed at and processing is performed according to the gaze position of the user has been described, but in addition, the present technology can be also applied, for example, in a case where the administrator of the information processing system checks a thing gazed at by the user, as illustrated in Fig. 10. Note that, in Fig. 10, portions corresponding to those in Fig. 3 are denoted by the same reference signs, and description thereof will be appropriately omitted.

In the example illustrated in Fig. 10, two cameras 131-1 and 131-2 are arranged as cameras for capturing images, in the space to be detected, and the cameras 131-1 and 131-2 correspond to the cameras 12 of Fig. 3. Furthermore, although not illustrated, these cameras 131-1 and 131-2 are connected to the information processing apparatus 52 in a wired or wireless manner.

In this example, an object 132 to be gazed at which has a known position in the global coordinate system is arranged, in the space to be detected. In the information processing apparatus 52, a gaze direction of each user U21 is detected to identify whether the user U21 gazes at the object 132 to be gazed at.

Furthermore, for example, when a plurality of the objects 132 to be gazed at is arranged in the space to be detected, the information processing apparatus 52 can identify whether a user U21 gazes at which object 132 to be gazed at. In addition, the information processing apparatus 52 can perform processing according to the gaze position, such as light emission or drive of the object 132 to be gazed at, which is gazed by the user U21, or can change a light emission pattern or driving of the object 132 to be gazed at, according to the accuracy in detection of a gaze direction of a user.

Furthermore, for example, when an image or a letter is displayed on an object 132 to be gazed at, which is gazed by a user U21, of a plurality of objects 132 to be gazed at, the number of objects 132 to be gazed at, on which the image or the letter is displayed, may be changed, according to the accuracy in detection of a gaze direction of the user U21.

The information processing system illustrated in Fig. 10 is particularly effective to research things attracting attention in a space to be detected, such as in a store, in an art museum, or on a street where it is difficult to ensure a standing position of each user U21.

Furthermore, the information processing system described above can be applied to for example, use of a sport or fighting game requiring big body movement of the user, using a detected user's gaze, or so-called home appliance, such as a home air conditioner or a TV set selected by user's gaze and controlled by voice.

Incidentally, a series of process steps described above may be performed by hardware or software. In a case where the process is performed by the software, programs constituting the software are installed in a computer. Here, the computer includes, for example, a computer incorporated into dedicated hardware, and a general-purpose personal computer configured to execute various functions by installing various programs, or the like.

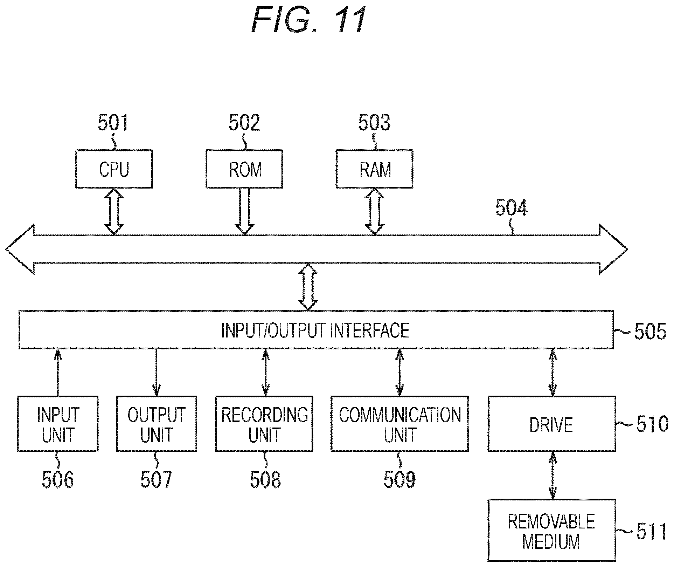

Fig. 11 is a block diagram illustrating an exemplary configuration of hardware of a computer performing the series of process steps described above by a program.

In the computer, a central processing unit (CPU) 501, a read only memory (ROM) 502, and a random access memory (RAM) 503 are connected to each other via a bus 504.

The bus 504 is further connected to an input/output interface 505. The input/output interface 505 is connected to an input unit 506, an output unit 507, a recording unit 508, a communication unit 509, and a drive 510.

The input unit 506 includes a keyboard, a mouse, a microphone, an imaging element, or the like. The output unit 507 includes a display, a speaker, or the like. The recording unit 508 includes a hard disk, a non-volatile memory, or the like. The communication unit 509 includes a network interface or the like. The drive 510 drives a removable medium 511 such as a magnetic disk, an optical disk, a magnetooptical disk, or a semiconductor memory.

In the computer configured as described above, the CPU 501 loads for example a program recorded on the recording unit 508 into the RAM 503 via the input/output interface 505 and the bus 504, and executes the program. Thereby, the above-mentioned series of process steps is performed.

A program executed by the computer (CPU 501) may be provided by being recorded, for example, on the removable medium 511 as a package medium or the like. Additionally, a program may be provided via a wired or wireless transmission medium such as a local area network, the Internet, or digital satellite broadcasting.

In the computer, a program may be installed in the recording unit 508 via the input/output interface 505, by mounting the removable medium 511 to the drive 510. Additionally, a program may be received at the communication unit 509 via a wired or wireless transmission medium, and installed in the recording unit 508. In addition, a program may be previously installed in the ROM502 or the recording unit 508.

It is noted that the program executed by the computer may be a program processed in time series in order as described in the present description, or a program processed in parallel or when needed, for example, when evoked.

Additionally, embodiments of the present technology is not intended to be limited to the above embodiments, and various modifications and variations may be made without departing from the scope and spirit of the present technology.

For example, the present technology may include a configuration of cloud computing for sharing one function between a plurality of apparatuses through a network.

Additionally, the steps having been described in the above-mentioned flowchart can be performed by the one apparatus, and further shared between the plurality of apparatuses.

Further, in a case where one step includes a plurality of processes, the plurality of processes of the one step may be performed by the one apparatus, and further shared between the plurality of apparatuses.

Furthermore, the present technology may have the following configurations.
[1] An information processing apparatus including:
   a gaze direction detection unit that detects a gaze direction of a user, on the basis of captured images obtained by capturing images of the user as an object by a plurality of image capturing units; and
   a detection accuracy calculation unit that calculates accuracy in detection of the gaze direction of the user.
[2] The information processing apparatus according to [1], in which
   the detection accuracy calculation unit calculates the accuracy in detection, on the basis of at least any of information about a positional relationship between the image capturing unit and the user, information about the image capturing unit, information about the captured images, and a duration of gazing by the user.
[3] The information processing apparatus according to [1] or [2], further including
   a first processing unit that performs processing according to the accuracy in detection.
[4] The information processing apparatus according to [3], in which
   the first processing unit is configured to display an operation screen operated by the gaze of the user, in a display mode according to the accuracy in detection.
[5] The information processing apparatus according to [4] in which
   the first processing unit is configured to display objects to be operated, having different sizes, on the operation screen, according to the accuracy in detection.
[6] The information processing apparatus according to [4] or [5], in which
   the first processing unit is configured to display different numbers of objects to be operated on the operation screen, according to the accuracy in detection.
[7] The information processing apparatus according to any of [4] to [6], further including
   a second processing unit that performs processing according to a gaze position of the user on the operation screen, obtained from the gaze direction.
[8] The information processing apparatus according to [7], in which
   the first processing unit is configured to display the operation screen on which several objects to be operated positioned in the vicinity of the gaze position are displayed as candidates for an object to be operated corresponding to the gaze position, in a case where the accuracy in detection is less than a threshold.
[9] The information processing apparatus according to any of [3] to [8], in which
   the first processing unit compares the accuracy in detection of the gaze direction calculated for each of a plurality of the users with a predetermined threshold to perform processing according to a result of the comparison.
[10] An information processing method including the steps of:
   detecting a gaze direction of a user, on the basis of captured images obtained by capturing images of the user as an object by a plurality of image capturing units; and
   calculating accuracy in detection of the gaze direction of the user.
[11] A program for causing a computer to execute a process, including the steps of:
   detecting a gaze direction of a user, on the basis of captured images obtained by capturing images of the user as an object by a plurality of image capturing units; and
   calculating accuracy in detection of the gaze direction of the user.
[12] An information processing apparatus including:
   a gaze direction detection unit that detects a gaze direction of a user, on the basis of at least one of captured images obtained by capturing images of the user as an object by a plurality of image capturing units;
   a head detection unit that detects a head of the user from the captured images, for at least two of the captured images obtained by the plurality of the image capturing units, to determine a position of the head of the user, and determining the position of the head from part of the user detected from the captured images by estimation, in a case where a head of the user is not detected from the captured images; and
   a gaze position calculation unit that calculates a gaze position of the user on the basis of the gaze direction of the user and the position of the head of the user obtained for the at least two captured images.

### REFERENCE SIGNS LIST

- 51-1 to 51-N, 51: Camera
- 52: Information processor
- 61: Acquisition unit
- 62: Control unit
- 64: Display unit
- 71: Camera recognition unit
- 72: Face detection unit
- 73: Gaze direction detection unit
- 74: Gaze position calculation unit
- 75: Detection accuracy calculation unit
- 76: UI processing unit

## Claims

1. An information processing apparatus comprising:
a gaze direction detection unit that detects a gaze direction of a user, on the basis of captured images obtained by capturing images of the user as an object by a plurality of image capturing units; and
a detection accuracy calculation unit that calculates accuracy in detection of the gaze direction of the user.

2. The information processing apparatus according to claim 1, wherein
the detection accuracy calculation unit calculates the accuracy in detection, on the basis of at least any of information about a positional relationship between the image capturing unit and the user, information about the image capturing unit, information about the captured images, and a duration of gazing by the user.

3. The information processing apparatus according to claim 1, further comprising
a first processing unit that performs processing according to the accuracy in detection.

4. The information processing apparatus according to claim 3, wherein
the first processing unit is configured to display an operation screen operated by the gaze of the user, in a display mode according to the accuracy in detection.

5. The information processing apparatus according to claim 4, wherein
the first processing unit is configured to display objects to be operated, having different sizes, on the operation screen, according to the accuracy in detection.

6. The information processing apparatus according to claim 4, wherein
the first processing unit is configured to display different numbers of objects to be operated on the operation screen, according to the accuracy in detection.

7. The information processing apparatus according to claim 4, further comprising
a second processing unit that performs processing according to a gaze position of the user on the operation screen, obtained from the gaze direction.

8. The information processing apparatus according to claim 7, wherein
the first processing unit is configured to display the operation screen on which several objects to be operated positioned in the vicinity of the gaze position are displayed as candidates for an object to be operated corresponding to the gaze position, in a case where the accuracy in detection is less than a threshold.

9. The information processing apparatus according to claim 3, wherein
the first processing unit compares the accuracy in detection of the gaze direction calculated for each of a plurality of the users with a predetermined threshold to perform processing according to a result of the comparison.

10. An information processing method comprising the steps of
detecting a gaze direction of a user, on the basis of captured images obtained by capturing images of the user as an object by a plurality of image capturing units, and
calculating accuracy in detection of the gaze direction of the user.

11. A program for causing a computer to execute a process, comprising the steps of
detecting a gaze direction of a user, on the basis of captured images obtained by capturing images of the user as an object by a plurality of image capturing units, and
calculating accuracy in detection of the gaze direction of the user.

12. An information processing apparatus comprising:
a gaze direction detection unit that detects a gaze direction of a user, on the basis of at least one of captured images obtained by capturing images of the user as an object by a plurality of image capturing units;
a head detection unit that detects a head of the user from the captured images, for at least two of the captured images obtained by the plurality of the image capturing units, to determine a position of the head of the user, and determining the position of the head from part of the user detected from the captured images by estimation, in a case where a head of the user is not detected from the captured images; and
a gaze position calculation unit that calculates a gaze position of the user on the basis of the gaze direction of the user and the position of the head of the user obtained for the at least two captured images.
